# EUROPEAN PATENT SPECIFICATION

(11) **EP 1 222 150 B1**
(45) Date of publication and mention of the grant of the patent: **12.05.2004**
(21) Application number: 00964231.5
(22) Date of filing: 25.09.2000
(51) Int. Cl.: C05B 7/00, C05B 1/00, C05B 21/00, C05D 9/00, C05B 19/00, C01F 7/02

(54) **PHOSPHORUS DOPED ACTIVATED ALUMINA**
PHOSPHORDOTIERTES AKTIVIERTES ALUMINIUMOXID
ALUMINE ACTIVEE DOPEE AU PHOSPHORE

(30) Priority: 24.09.1999 EP 99118849
(43) Date of publication of application: 17.07.2002
(73) Proprietor: ALBEMARLE CORPORATION, Baton Rouge Louisiana 70801 (US); Danish Institute of Agricultural Sciences Department of Horticulture Research Centre Aarslev, 5792 Aarslev (DK)
(72) Inventor: HANSEN, Conny, W., DK-5260 Odense S (DK); HOFIUS, Henning, 52070 Aachen (DE); NIELSEN, Kai, L nne, DK-5000 Odense C (DK)
(74) Representative: UEXKÜLL & STOLBERG
(86) International application number: PCT/EP2000/009347
(87) International publication number: WO 2001/021553

(56) References cited:
- DD-A- 298 206
- FR-A- 2 529 195
- US-A- 4 083 911
- US-A- 4 334 908
- US-A- 4 629 717
- US-A- 5 693 119

## Description

The invention relates to a new process for producing granules of a phosphorus doped activated alumina, the granules themselves and the use of the granules as a growth regulator, especially as low phosphorus buffer in potted plants. Here and in the following, "phosphorus" always means pentavalent inorganic phosphorus (P^{v}), e. g., phosphate.

Chemical growth regulation is widely used in conventional horticultural production systems to produce flowering potted plants with e. g. desired height and shape. Most of the species produced as potted plants require growth regulation in order to become a saleable product. Restrictions against the use of chemical growth regulators due to environmental concerns set up pressure to find alternative ways of plant growth regulation.

A method of fertilising plants with phosphorus charged on alumina, the phosphorus being slowly desorbed and made available for plant uptake is disclosed in US-A 5 693 119. The phosphorus source is an acid treated activated alumina which is obtained after contacting an active alumina with an aqueous solution of potassium dihydrogenphosphate for three days and after two days of drying at a relatively low temperature. This process was found too laborious for large scale production. On the other hand it was determined that the drying lead to some loss of activity. Furthermore, the (hydrochloric) acid treatment results in a considerable chloride content of the resulting P buffer which is undesirable as many plant species are chloride-sensitive.

In order to successfully use phosphorus buffers for sufficient growth regulation a strict control of phosphorus desorption is extremely important. Plants need to be grown under moderate and controlled phosphorus deficiency for sufficient growth regulation, and any loss of buffer activiy may result in undesirably low phosphorus concentration in the growth media and may cause deleterious phosphorus starvation.

Phosphorus doped alumina produced according to US-A 5 693 119 does not desorb the phosphorus in such a precisely controllable manner which would be necessary for controlled phosphorus deficiency and optimal growth regulation. It has also been found that this doped alumina contains a large amount of moisture (as determined at 300 °C), usually more than 10%.

One object of the invention therefore is to produce a phosphorus doped activated alumina which does not incur the drawbacks known in the art. A further object of the invention is to provide an improved and environment-friendly growth regulator, especially a low P-buffer for potted plants.

It was found that phosphorus doped activated alumina produced following the procedure of claim 1 surprisingly showed excellent properties as growth regulator, especially as a low P-buffer in potted plants.

According to claim 1 the process comprises the steps of
a) compacting a mixture of an aluminium hydroxide and a phosphorus source
b) size reducing the compacted material and
c) activating the size reduced material at a temperature of at least 300 °C, preferably 350 °C to 600 °C, and, optionally,
d) classifying the granules obtained by steps a) - c).

Here and in the following, the term "aluminium hydroxide" comprises both Al(OH)₃ and AIOOH. The aluminium hydroxides suitable as starting material for the process of the invention usually are commercially available aluminium hydroxides obtained from the Bayer process, such as aluminium hydroxides of the MARTINAL® type of Alusuisse Martinswerk, Bergheim, Germany.

Though not preferred, a pseudoboehmite of the formula AIOOH or mixtures thereof with aluminium hydroxide may also be used as starting material.

The grain size of a suitable Bayer aluminium hydroxide is as a rule such that 95 wt.% of the material does not exceed 200 µm in grain diameter. The *d*₅₀ value preferably ranges between 30 µm and 150 µm.

The specific surface area (according to BET) of the starting material is not critical but as a rule is usually 5 m²/g or less.
The Na₂Oₜₒₜₐₗ content is expediently chosen lower than 0.5 wt.% referring to Al₂O₃.
In order to guarantee a satisfactory compaction process the moisture content is, depending on the grain size, preferably held below 2.0 %.

The phosphorus source is expediently selected from phosphoric acid, salts derived from phosphoric acid or mixtures thereof. Alternatively also mineral phosphates (i. e., naturally occuring phosphates) or salts derived from mineral phosphates like calcium phosphates or ammonium phosphates can be used.

Suitable salts derived from phosphoric acid can e. g. be selected from phosphates, monohydrogenphosphates or dihydrogenphosphates of potassium, magnesium and/or calcium, which may be supplemented by micronutrients such as zinc, iron and copper.
Expediently mixtures of phosphoric acid and a phosphate, monohydrogenphosphate or dihydrogenphosphate of potassium, magnesium and/or calcium and, optionally, zinc, iron or copper are applied.

As a rule phosphoric acid also functions as a preferable pH adjustment source. However a pH adjustment can also be achieved with other mineral acids like hydrochloric acid or sulfuric acid, although not preferred due to the decomposition and formation of toxic gases during the activation treatment or the resulting chloride content.

The cations mentioned also play an important role as nutrient elements. They can not only be provided in the form of the respective phosphate salt but also (additionally) in the form of other common salts like e. g. sulfates or nitrates.

In the mixture containing phosphoric acid and salt(s) derived from phosphoric acid the ratio of phosphoric acid to salt(s) derived from phosphoric acid is preferably 1:0.3 to 1:20.
However also a loading with 100% phosphoric acid or 100% salt derived from phosphoric acid is possible.

Particularly good results have been obtained with mixtures of phosphoric acid and potassium dihydrogenphosphate, the mixtures preferably having a phosphoric acid content of 5 wt.% to 15 wt.% and a potassium dihydrogenphosphate content of 85 wt.% to 95 wt.%, calculated from the mixture to be compacted.
In order to facilitate mixing, the phosphorus source preferably is a material having a grain diameter in the 50% range (*d*₅₀) of 1 µm to 100 µm.

The content of the phosphorus source (calculated as PO₄³⁻) in the mixture to be compacted is expediently in the range of 1 wt.% to 20 wt.%, preferably 5 wt.% to 16 wt.%.

Prior to compaction the mixture of aluminium hydroxide and the phosphorus source is as a rule homogenised in a suitable blending equipment.
Such equipment is known to those skilled in the art. Common equipment which can be operated either continuously or discontinuously is available from several manufacturers, e. g. Bepex Hosokawa (Nauta blender), from Lödige or from Eirich.
Compaction is conveniently carried out with equipment and according to methods known by those skilled in the art. Compaction of aluminium hydroxide is for instance exemplified in DE-C-25 14 758.
Usually the blended and homogenised material is fed in a screw conveyor unit which has the task to constantly feed the pre-compressed material in the compactor.

A preferred compactor unit can be characterised by two counterrotating rollers, one fixed and one movable, forming a narrow gap (nip) of variable width, e. g. of 2 cm or less. The movable roller should be able to expose the feedstock between the rollers to a compacting force of 50 kN to 200 kN per cm of nip length.

The result of the compaction treatment as a rule is a plate or a ribbon with a thickness of e. g. 0.4 cm to 0.6 cm.

Size reduction usually comprises a series of steps. The compacted material is as a rule first coarsely crushed in a suitable crushing unit. A further intense size reduction can then for instance be achieved in a hammer crusher thereby, depending on the outlet screen, the grain size coming down to a grain diameter of e. g. 4 mm. Pre-classification and screening can then be accomplished in e. g. a screening sizer unit, thereby finally obtaining a granule-like material.
In a preferred embodiment, after this size reduction steps at least 95 wt.% of the particles have a particle size of between 0.1 mm and 1.5 mm, the most preferred diameter being e. g. 0.5 mm to 1.5 mm.
The apparent density (as determined with a Hg-porosimeter at low pressure) of the granules obtained ranges in general between 2.2 and 2.4 g/cm³.

All the means for size reduction and classification are well known to those skilled in the art.

The activation of the compacted granules takes place in a suitable kiln or oven. Good results have been achieved in an indirectly fired rotary kiln (without lining) wherein the granules are treated at a temperature of 350 °C to 800 °C, preferably 350 °C to 600 °C. The preferred temperature at the shell of the kiln has been determined to be between 650 °C and 750 °C.

The activated phosphorus doped alumina granules can finally be further processed with respect to granule size distribution.
As a rule, 90 wt.% of the activated phosphorus doped alumina granules have a grain diameter smaller than 1.25 mm.
The average particle size in the 50% range (*d*₅₀) of the activated material is preferably in the range of 0.5 mm to 1.0 mm.
The bulk density of the activated material is expediently between 650 g/l and 950 g/l, whereas the pycnometric density is about 3.1-3.2 g/cm³.

The quality of the activation can be controlled over the specific surface area (measured according to BET) and the loss on ignition (LOI) of the activated material. The surface area of the activated material should expediently be in the range of 120 m²/g to 380 m²/g, preferably in the range of 250 m²/g to 320 m²/g. The loss on ignition of the activated material preferably lies between 1% and 15%, most preferably 4% to 10%.

The activated phosphorus doped alumina granules produced with the present process of the invention preferably have a phosphorus content between 50 g PO₄³⁻/kg and 150 g PO₄³⁻/kg (5 to 15 wt.%).

The granular phosphorus doped aluminas produced according to the invention are therefore capable of providing aqueous solutions, e. g. the aqueous phase in the growth media of horticultural plants, with phosphorus in a wide concentration range and are thus well-suited as growth regulators.

Depending on the phosphorus source used, the growth media can further be provided with the respective cation of the phosphorus source, e. g. with potassium, magnesium and/or calcium as well as zinc, iron or copper, elements which also play an important role as nutrient or micronutrient elements.

The desorption of phosphorus and optional other nutrient elements from the activated alumina depends on the concentration of phosphorus and the other nutrient elements in the activated phosphorus doped alumina granules as well as on the pH of the buffer solution. It has been found that the phosphorus doped alumina granules according to the invention have in fact buffering properties, i. e., they do not only supply phosphorus to the media via desorption, but may also absorb excess phosphorus from the media.

It has been found that, depending on the buffer system employed, a predictable desorption of phosphorus, resulting in a phosphorus concentration in the liquid phase in the range of about 5 to 5000 µM, can be achieved. Especially when used as low-P buffer in potted plants, low and controlled phosphorus concentrations, usually in the range of 5 to 100 µM, preferably 10 to 50 µM, can surprisingly be provided throughout the whole production period of the respective potted plant.
These low phosphorus concentrations, which are at least about twenty times lower than standard concentrations in nutrient solutions, showed strong growth retarding effect without reducing plant quality.

The granular phosphorus doped activated aluminas according to the invention can also be characterised by a phosphorus content (calculated as PO₄³⁻) of 1 to 20 wt.%, a specific surface area (according to BET) of 120 to 380 m²/g, a moisture content (determined at 300 °C) of less than 5%, preferably less than 1.5%, and a loss on ignition (determined at 1200 °C) of 1% to 15%, preferably 4% to 10%.

Preferably, they have an average particle size in the 50% range (*d*₅₀) of 0.5 mm to 1.0 mm. The activated phosphorus doped alumina granules of the present invention show a great potential to reduce or even replace chemical growth regulation in several species of plants. The method has so far been found to be suited for large-scale produced crops or flowering potted plants such as asters (*Aster novi-belgii*), marguerite daisies *(Argeranthemum frutescens*), Poinsettia (*Poinsettia pulcherrima*), miniature roses (*Rosa-hybrid*), Persian violet (*Exacum affine*) and chrysanthemum (*Dendranthema grandiflorum-hybrid*) having considerable need for growth regulation. The species represent a large diversity, both with regard to the type of chemical growth regulators traditionally used by the industry and the number of applications (amount) required for sufficient growth regulation. All species have shown a strong and similar response to low phosphorus availability.

Besides the growth regulating properties based on their phosphorus buffer activity, the activated phosphorus doped alumina granules of the present invention show several further advantageous features.

It has been found that they also exhibit pH buffering properties and may therefore used as pH buffers in the growing media of plants, preferably potted plants. This is of particular importance for growing media based on materials having little buffer capacity.

Furthermore, it has been found that they are also capable of desorbing nutrients other than phosphorus (e. g., potassium) in a predictable and controllable manner and may therefore act as potassium buffers. This is particularly surprising as phosphorus doped alumina prepared according to prior art methods (US-A-5 693 119) was found to show only very poor potassium desorption.

Another surprising feature is their ability to improve peat-based growing media which - depending on the origin and quality of the peat - often exhibit growth- and/or germination-inhibiting properties due to a content of certain soluble organic compounds. It has been found that the germination- and/or growth rates of several plant species on peat of poor quality can be increased considerably by addition of activated phosphorus doped alumina according to the present invention. Good results have been obtained with e. g. buckwheat (*Fagopyrum esculentum* Moench.), cress (*Lepidium sativum* L.), Chinese cabbage (*Brassica rapa* L. ssp. *pekinensis* Lour.), lettuce (*Lactuca sativa* L. and tomato *(Lycopersicon esculentum* Mill.). This product may therefore be used as an ameliorating agent for peat-based growing media for plants.

Still another advantageous property of the activated phosphorus doped alumina according to the present invention is its ability to supply several micronutrients (e. g., Mn, Fe, Cu, Zn, Mo) and control their concentration in the growing media of plants, preferably potted plants, by desorption or absorption. It has, for example, been found that it is able to reduce the iron content below the toxic concentrations sometimes encountered in the culture of iron-sensitive species such as *Pentas lanceolata* by absorbing iron from the growing media.

The following non-limiting examples illustrate several embodiments of the invention. The physical and chemical characteristics of the product were measured according to standard methods, for example ISO 803 (moisture content, determined at 300 °C) and ISO 806 (loss on ignition, determined at 1200 °C).

### Examples:

### 1. Production of a phosphorus doped alumina

### 1.1 Discontinuous production of a medium-P buffer

Dry aluminium trihydroxide (Al(OH)₃, 1500 kg) with the following specification:
Moisture: 0.45 wt.%
Na₂O content: 0.29 wt.% (referred to Al₂O₃)
Loss on ignition (LOI): 34.9 wt.%
Bulk density: 1120 g/l
Grain size distribution:
   >150 µm: 16.8 wt.%
   >106 µm: 55.6 wt.%
   >75 µm: 75.6 wt.%
   <45 µm: 12.4 wt.%
   was discontinuously blended and homogenised for 30 min with 25.7 kg of orthophosphoric acid (85wt.%, technical quality) and 135 kg of monopotassium dihydrogenphosphate (KH₂PO₄, technical quality, average grain size *d*₅₀ = 50 µm) using a Nauta blender. This material was stored in a silo before using. Then a constant feed of 1200 kg/h was pre-densified in a screw conveyor unit and subsequently compacted between two rotating rollers forming a nip (gap) having a length of 15 cm. The roller diameter was 52 cm. The rollers were pressed together by hydraulic means, the measured (hydraulic) pressure being 200 bar corresponding to a compacting force of ca. 108 kN/cm in the nip. The resulting compacted ribbon/plate had a thickness (corresponding to the nip width) ranging between 4 and 6 mm. In the next step, the compacted aluminium trihydroxide plate was crushed using a single-roll crusher ("fissator"). Granules finer than 1 mm were separated from the process by screening. Further intense crushing was realised in a hammer crusher with an outlet screen size of 4 mm. Pre-classification and screening was carried out by a screening sizer (undersize: <0.71 mm; oversize: >1.12 mm). The "go"-fraction was stored in a silo. A constant product feed (1100 kg/h) was activated in an indirectly fired rotary kiln (unlined steel shell, total length ca. 9 m, length of heated zone 7.2 m, diameter 90 cm, inclination 1°) rotating at approx. 2 rpm, wherein the granules were treated at a shell temperature of 750 °C for about 1 h. After activation the product was screened to obtain a fraction having 0.315 to 1.25 mm particle size.

### The final product had the following characteristics:

Specific surface area (BET): 265 m²/g
Loss on ignition: 5.4 wt.%
Na₂Oₜₒₜₐₗ: 0.21 wt.% (referred to Al₂O₃)
Moisture (at 300 °C): 0.65 wt.%
Bulk density: 765 g/l
Pycnometric density: 3.14 g/cm³
Grain size distribution:
   >1.00 mm: 8.0 wt.%
   >0.50 mm: 82.7 wt.%
   >0.315 mm: 98.7 wt.%
   PO₄³⁻ content: 9.6 wt.%
   K₂O content: 3.9 wt.%

### 1.2 Continuous production of low to medium phosphorus buffers

1350 kg/h of a dried aluminium trihydroxide (Al(OH)₃), with the following specification:
- moisture: 0.2 wt.%
- Na₂O content: 0.33 wt.% (referred to Al₂O₃)
- Loss on ignition (LOI): 34.7 wt.%
- Bulk density: 1200 g/l
- Grain size distribution:
   >200 µm: 1.6 wt.%
   >150 µm: 11.9 wt.%
   >75 µm: 82.4 wt.%
   <45 µm: 3.1 wt.%
   was continuously blended and homogenised with orthophosphoric acid (85 wt.%, technical quality) at a feed rate F1 and monopotassium dihydrogenphosphate (KH₂PO₄, technical quality, average grain size *d*₅₀ = 25 µm) at a feed rate F2 using a Nauta blender. This feed was pre-densified in a pre-compression screw conveyor unit. The power consumption of the screw conveyor was controlled in order to ensure a constant feed rate to the subsequently working roller-type compactor. Then the mixture was compacted between two counterrotating rollers forming a nip (cf. preceding example). The measured hydraulic pressure was 195 bar, corresponding to a compacting force of ca. 105 kN/cm. The resulting compacted ribbon/plate had a thickness ranging between 4 mm and 6 mm. In the next step, the compacted aluminium trihydroxide plate was crushed using a single-roll crusher ("fissator"). Granules finer than 1 mm were separated from the process by sieving. Further intense crushing was realised in a hammer crusher with an outlet screen size of 4 mm. Pre-classification and screening was carried out by a screening sizer (undersize: <0.71 mm; oversize: >1.25 mm). The "go"-fraction was stored in a silo. A constant product feed (1000 kg/h) was activated in an indirectly fired rotary kiln (details see above) wherein the granules were treated at a shell temperature of 730 °C. After activation the product was screened to obtain a particle size between 0.315 mm and 1.25 mm. The final products had the following characteristics listed in the table below:

**Table:**

| **Example No.** | **1.2.1** | **1.2.2** | **1.2.3** | **1.2.4** | **1.2.5** | **1.2.6** |
|---|---|---|---|---|---|---|
| **F1 [kg/h]** | 11.5 | 11.5 | 11.5 | 11.5 | 11.5 | 11.5 |
| **F2 [kg/h]** | 3.0 | 12.7 | 49.7 | 66.2 | 118.5 | 250.7 |
| **Surface area (BET) [m**^{**2**}**/g]** | 303 | 296 | 305 | 294 | 297 | 260 |
| **Loss on ignition [wt.%]** | 6.5 | 6.6 | 7.8 | 7.8 | 5.6 | 7.6 |
| **Bulk density [g/l]** | 815 | 825 | 805 | 725 | 680 | 685 |

| **Granule size distribution [wt.%]** | | | | | | |
|---|---|---|---|---|---|---|
| **>1.25 mm** | 8.2 | 1.8 | 5.3 | 4.6 | 6.1 | 3.5 |
| **>1.00 mm** | 38.3 | 26.2 | 34.8 | 27.2 | 31.1 | 31.7 |
| **>0.5 mm** | 92.5 | 89.7 | 91.2 | 86.7 | 93.2 | 88.3 |
| **>0.315 mm** | 99.8 | 98.2 | 99.5 | 99.7 | 99.3 | 99.4 |
| **PO**_{**4**}^{**3-**} **[wt.%]** | 1.2 | 1.9 | 4.3 | 5.5 | 8.6 | 14.6 |
| **K**_{**2**}**O [wt.%]** | 0.11 | 0.45 | 1.7 | 2.3 | 3.8 | 7.0 |

### 2. Desorption and plant tests

Desorption of phosphorus from the six samples 1.2.1 to 1.2.6 was tested using *Poinsettia* as model plant. The following standard growing procedure for *Poinsettia* was followed except for phosphorus being provided with the phosphorus doped activated alumina.

### Propagation:

Cuttings were propagated in peat at high phosphorus concentration (approx. 500 µM P) at a conventional greenhouse operation. After propagation the roots were rinsed free of the peat they were propagated in and transplanted into a P-free peat mixed with 2 wt.% phosphorus doped activated alumina.

### Treatments:

Growth media was mixed with 2 wt.% of a sample of the phosphorus doped activated alumina of examples 1.2.1 to 1.2.6. Soil solution samples were taken after each irrigation and the samples were analysed for plant available phosphorus once weekly. The treatments started mid October and the plants were grown vegetatively until early January of the following year when they were harvested.

### Replicates and statistics:

The experiment was designed as a randomised block design with two replicates per treatment.

### Temperature:

20 °C day/night until 4 weeks after the treatment started, hereafter 18 °C during the rest of the production period.

### Supplemental lighting:

*Poinsettia* requires short days (10-h day, 14-h night) for floral induction. The experiment was conducted during late fall and winter with natural short days.
20 hours of supplemental lighting was employed (60 µmol photons m⁻² s⁻¹) in order to keep the plants vegetative and to characterise maximum growth potential of the non-chemical growth regulated plants.

### Irrigation:

Plants were irrigated once or twice every week with a solution providing: NH₄: 1 mM; NO₃: 11.3 mM; K: 4.6 mM; Ca: 3.5 mM; Mg: 0.7 mM; Fe: 39.4 µM; Mn: 17.9 µM; B: 6.4 µM; Cu: 13.9 µM; Zn: 3.8 µM; Mo: 0.8 µM; Na: 0.2 µM; SO,: 0.7 µM.
pH: 5.8-6.0
CO₂: 700 ppm

### Growth regulation:

No chemical growth regulation was employed.

### Data collection:

Ten weeks after transplanting 16 plants per treatment were harvested and the following was recorded:

### Plant height:

Plant height was measured from the edge of the container to the apical meristem.

### Fresh weight:

The fresh weight of leaves and stems was measured immediately after the shoot was excised from the root.

### Dry weight:

The dry weight of leaves and stems was measured after 24 h of drying at 70 °C.

### Description of the drawings:

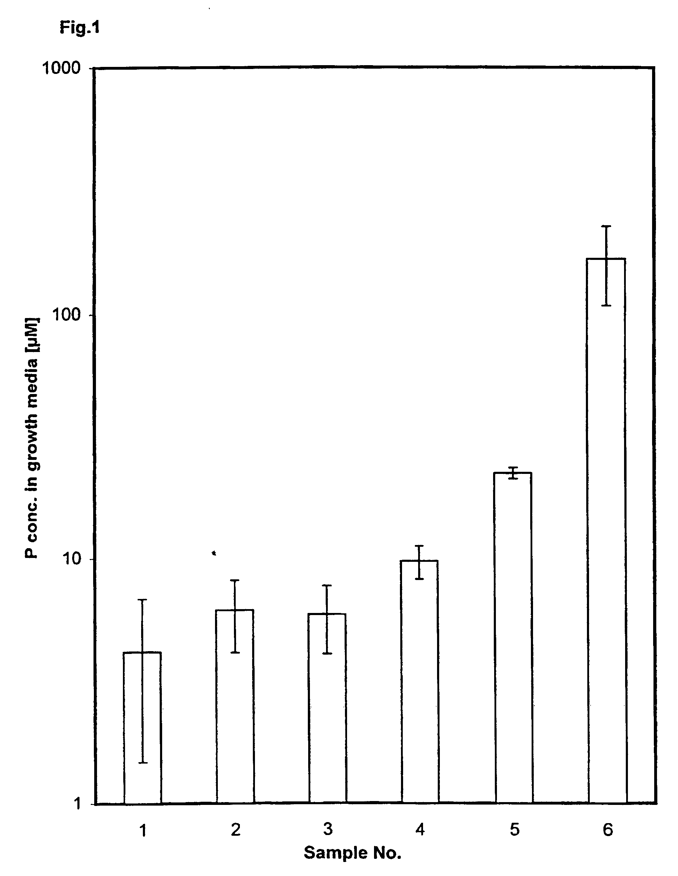

**Figure 1** shows the phosphorus desorption of the six samples (1.2.1 to 1.2.6) of phosphorus doped activated alumina obtained in example 1.2.
   Phosphorus desorption from several of the samples was low and stable, especially two of the samples (no. 4 and 5) showed low phosphorus desorption within the range required for an efficient growth regulation. The time dependency of phosphorus desorption was small in the samples where phosphorus desorption was low (nos. 1-5, see error bars) compared with that of sample no. 6 desorbing relatively high phosphorus concentrations.

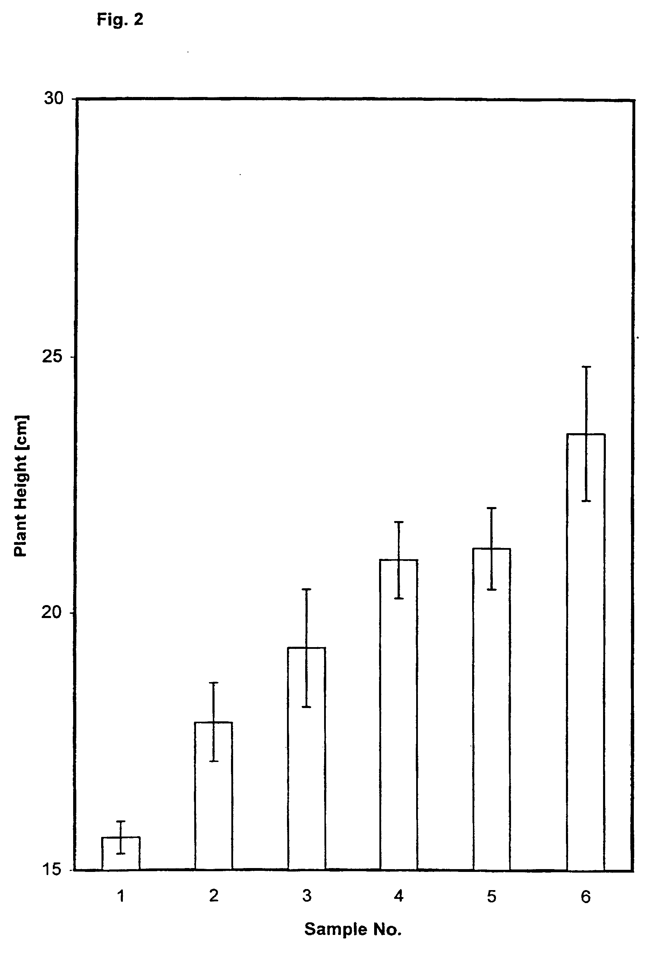

**Figure 2** shows the influence of the phosphorus desorption of the same six samples of phosphorus doped activated alumina on plant height. An efficient growth retardant effect was determined when plants were grown with low phosphorus concentration provided from phosphorus doped activated alumina.

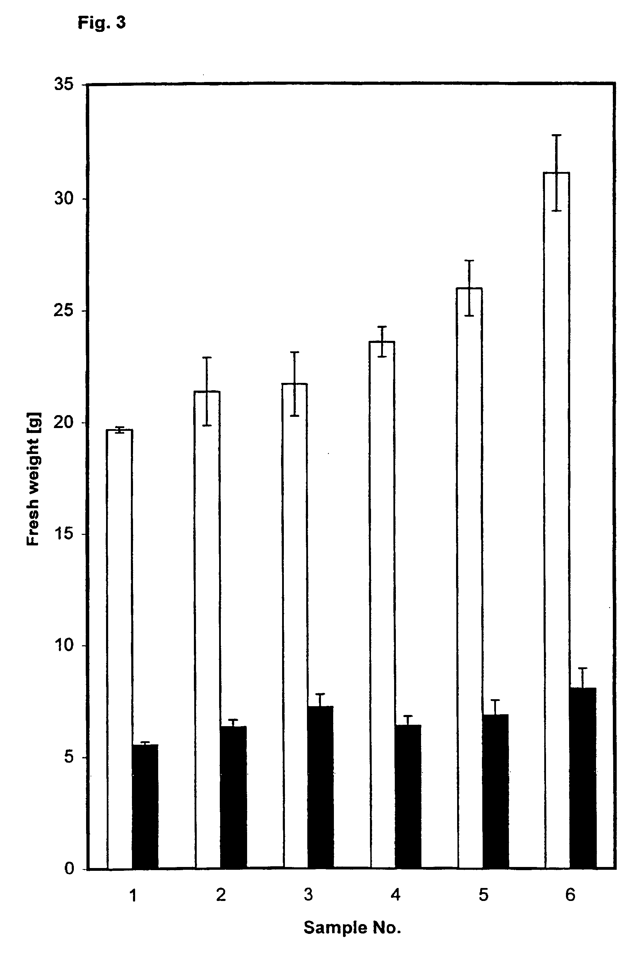

**Figure 3** shows the influence of the phosphorus desorption of the six samples of phosphorus doped activated alumina on plant fresh weight. Plant fresh weight was affected to a lesser extent than plant height.

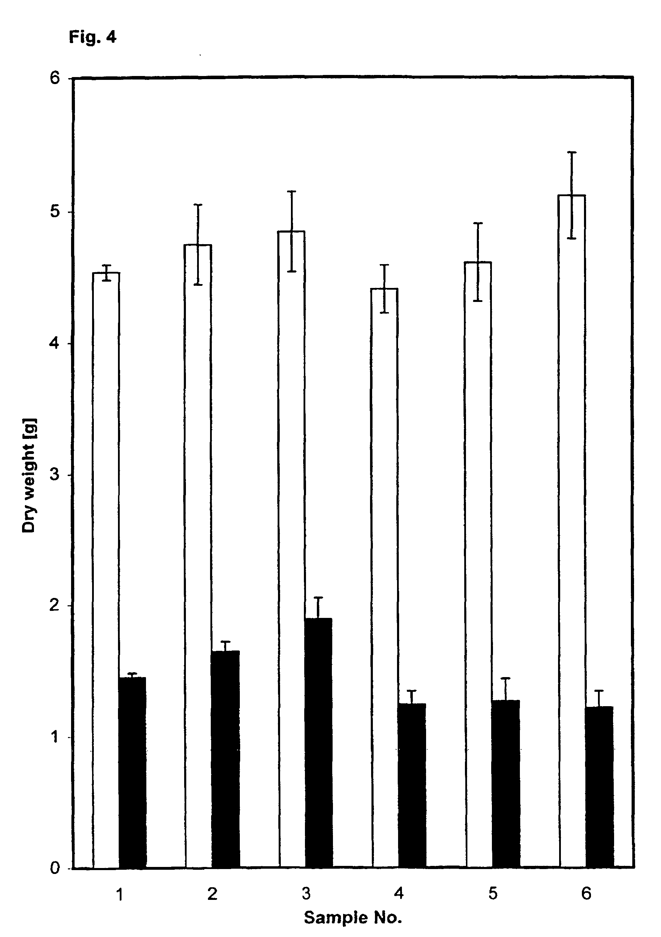

**Figure 4** shows the influence of the phosphorus desorption of the six samples of phosphorus doped activated alumina on plant dry weight. Also plant dry weight was affected to a lesser extent than plant height.

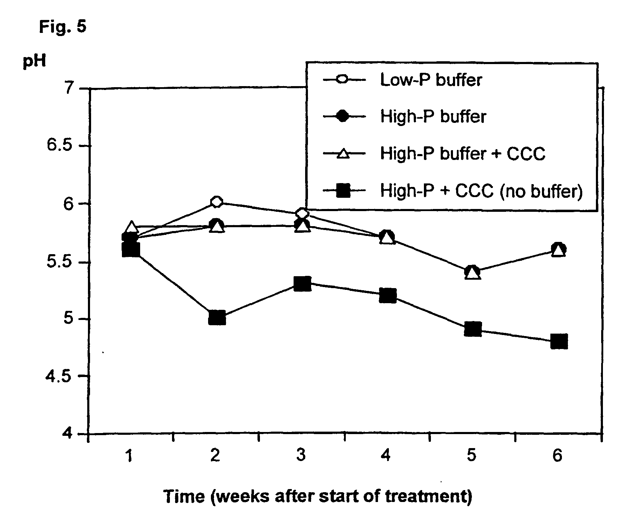

**Figure 5** shows the pH buffering behaviour of two different products according to the invention ("Low-P buffer" and "High-P buffer") during the production of *Argeranthemum frutescens* on peat based growing media. In one case, a common chemical growth retardant (cycocel, "CCC") was used in addition to High-P buffer while in one comparison example (solid square dots) only dissolved phosphate was used together with cycocel.

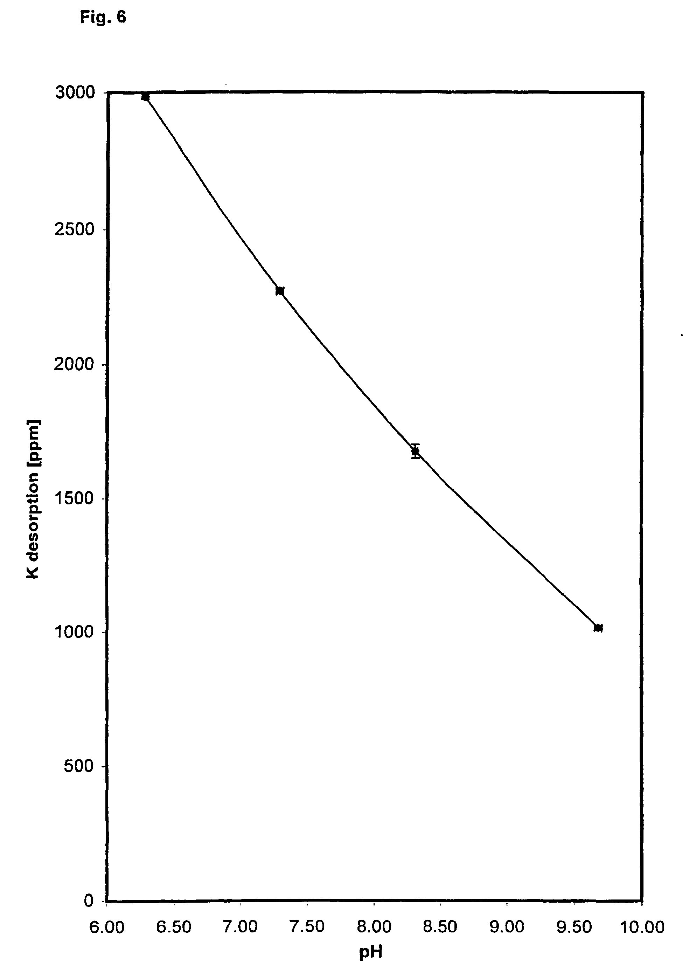

**Figure 6** shows the pH dependency of the potassium desorption from phosphorus doped activated alumina according to the invention. One part (per weight) of alumina was added to five parts of demineralised water. The diagram shows high potassium desorption in the pH range prevailing in plant culture (5.5-6).

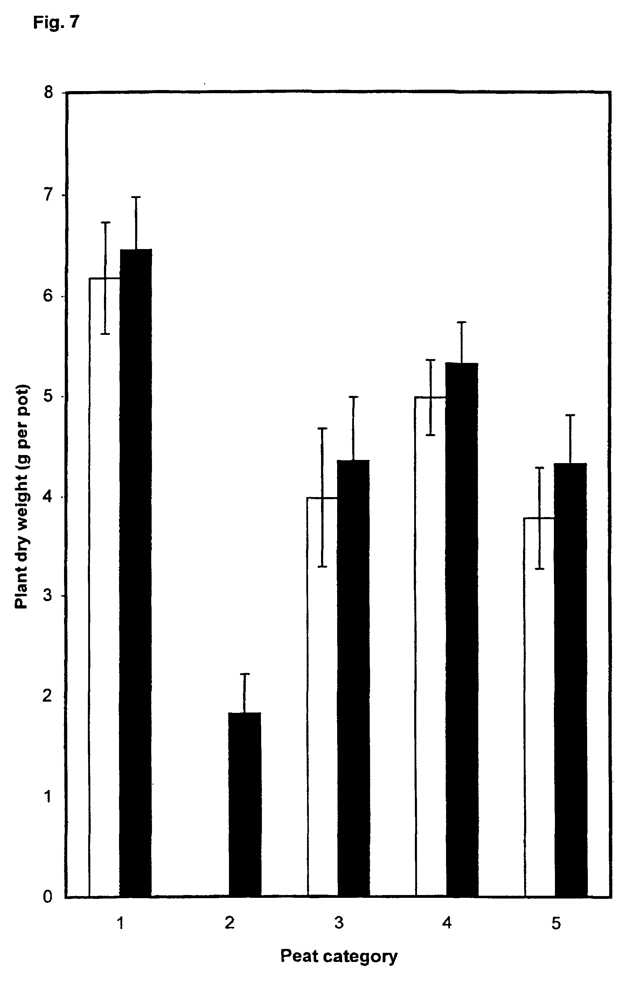

**Figure 7** shows the influence of the phosphorus doped activated alumina according to the invention on the growth rate of tomatoe *(Lycopersicon esculentum* Mill.) grown on different peat qualities. The solid bars refer to the results with addition of 2 vol.% phosphorus doped activated alumina while the hollow bars refer to the results obtained without addition. The peat categories were:
   (1) peat without any known problems (control)
   (2) lithuanian peat without fertilizer and not limed
   (3) peat where self-heating had occured
   (4) peat where problems had been identified in potted plant nurseries, samples taken prior to plant cultivation
   (5) same as (4), samples taken after plant cultivation.
   Five seeds were sown per pot and the plants were irrigated with a weak nutrient solution (EC 1.6, pH 6.0). The plant dry weight was determined after 4 weeks.

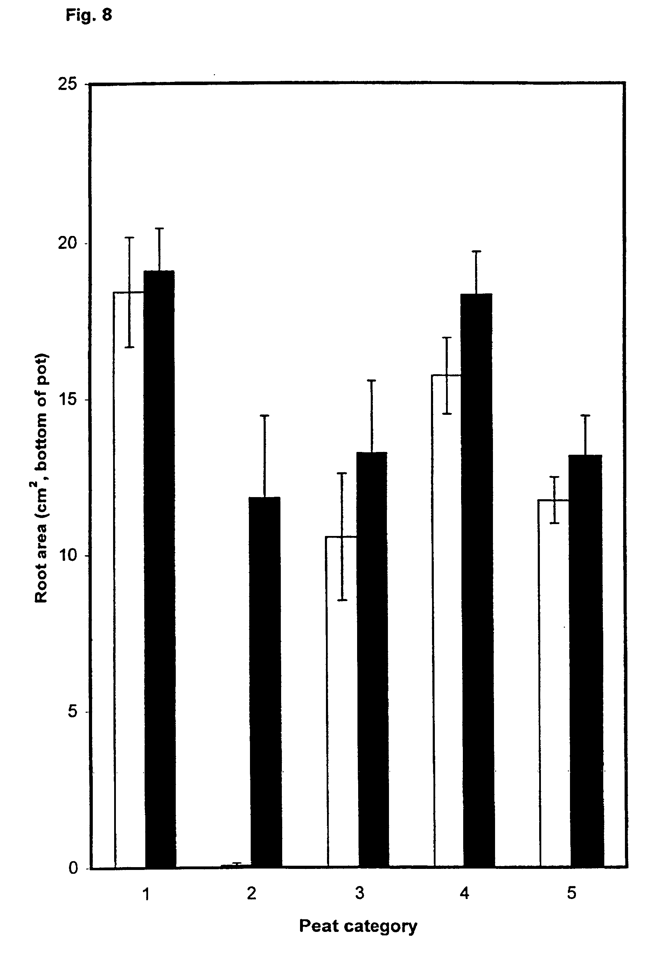

**Figure 8** shows the root area (measured on the bottom of the pot) of tomato grown under the same conditions as described above for Fig. 7.

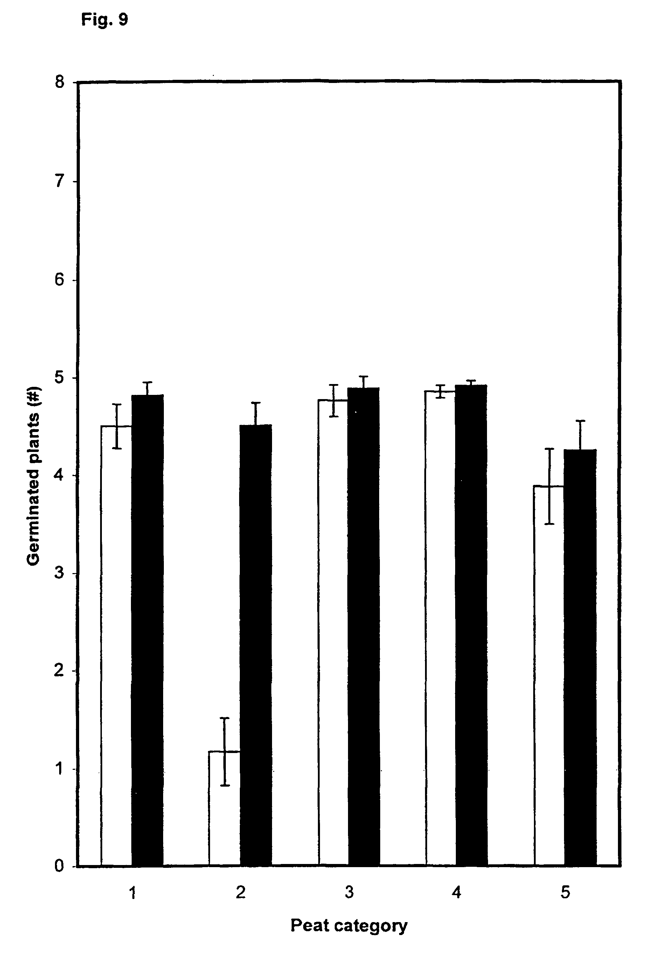

**Figure 9** shows the germination rate of tomato measured 10 days after sowing. The other conditions were the same as described above for Fig. 7.

## Claims

1. A process for the production of granules of a phosphorus doped activated alumina comprising the steps of
a) compacting a mixture of an aluminium hydroxide and a phosphorus source
b) size reducing the compacted material
c) activating the size reduced material at a temperature of at least 300 °C, preferably 350 °C to 600 °C and, optionally,
d) classifying the obtained granules.

2. A process according to claim 1, wherein a Bayer aluminium hydroxide having a grain diameter in the 50% range (*d*₅₀) of 30 µm to 150 µm is used as aluminium hydroxide.

3. A process according to claim 1 or 2, wherein the phosphorus source is selected from phosphoric acid, salts derived from phosphoric acid, mineral phosphates or mixtures thereof.

4. A process according to claim 3, wherein the salts derived from phosphoric acid are selected from phosphates, monohydrogenphosphates or dihydrogenphosphates of potassium, magnesium, calcium, zinc, iron or copper.

5. A process according to claim 3 or 4, wherein a mixture of phosphoric acid and salt(s) derived from phosphoric acid is used, the ratio of phosphoric acid to salt(s) derived from phosphoric acid being 1:0.3 to 1:20.

6. A process according to any one of claims 1 to 5, wherein the content of the phosphorus source in the mixture to be compacted is 1 wt.% to 20 wt.%.

7. A process according to any one of claims 1 to 6, wherein the compaction takes place in the nip between two rotating rollers, whereby the mixture is exposed to a pressure of 50 to 200 kN/cm.

8. A process according to any one of claims 1 to 7, wherein the compacted mixture is size reduced and granulated in such a manner that at least 95 wt.% of the resulting granules have a particle size between 0.1 mm and 1.50 mm.

9. A process according to any one of claims 1 to 8, wherein the activation takes place in a rotary kiln at a temperature of 300 °C to 800 °C, preferably 350 °C to 600 °C.

10. A process according to any one of claims 1 to 9, wherein the activated granules are classified to obtain an average particle size in the 50% range (*d*₅₀) of 0.5 mm to 1.0 mm.

11. A process according to any one of claims 1 to 10, wherein the activated granules have a specific surface area according to BET of 120 m²/g to 380 m²/g and a loss on ignition (1200 °C) between 1% and 15%.

12. A granular phosphorus doped activated alumina, obtainable according to the process of any one of claims 1 to 11.

13. A growth regulator for horticulture, comprising granules of a phosphorus doped activated alumina obtainable according claim 12.

14. A growth regulator according to claim 13, which is capable to provide plants with an controlled phosphate concentration in the aqueous phase of their growing media in the range of 5 to 100 µM.

15. A granular phosphorus doped activated alumina having a phosphorus content of 1 to 20 wt.% PO₄³⁻, a specific surface area (BET) of 120 m²/g to 380 m²/g, a moisture (300 °C) of less than 5%, preferably less than 1.5%, and a loss on ignition (1200 °C) of 1% to 15%, preferably 4% to 10%.

16. A granular phosphorus doped activated alumina according to claim 15, wherein the average particle size in the 50% range (*d*₅₀) is 0.5 mm to 1.0 mm.

17. Use of the phosphorus doped activated alumina according to claim 12 or 15 as low phosphorus buffer in the growing media of plants, preferably potted plants.

18. Use of the phosphorus doped activated alumina according to claim 12 or 15 as a pH buffer in the growing media of plants, preferably potted plants.

19. Use of the phosphorus doped activated alumina according to claim 12 or 15 as a potassium buffer in the growing media of plants, preferably potted plants.

20. Use of the phosphorus doped activated alumina according to claim 12 or 15 as an ameliorating agent for peat-based growing media for plants.

21. Use of the phosphorus doped activated alumina according to claim 12 or 15 as a micronutrient buffer in the growing media of plants, preferably potted plants.

## Patentansprüche

1. Verfahren zur Herstellung von Körnern aus phosphordotiertem aktiviertem Aluminiumoxid, das die Schritte
a) Kompaktierung einer Mischung von Aluminiumhydroxid und einer Phosphorquelle,
b) Größenverringerung des kompaktierten Materials,
c) Aktivierung des größenverringerten Materials bei einer Temperatur von mindestens 300 °C, vorzugsweise 350 °C bis 600 °C und gegebenenfalls
d) Klassierung der erhaltenen Körner
umfasst.

2. Verfahren nach Anspruch 1, bei dem ein Bayer-Aluminiumhydroxid, das im 50 %-Bereich (*d*₅₀) einen Korndurchmesser von 30 µm bis 150 µm aufweist, als Aluminiumhydroxid verwendet wird.

3. Verfahren nach Anspruch 1 oder 2, bei dem die Phosphorquelle aus Phosphorsäure, Salzen, die von Phosphorsäure abgeleitet sind, Mineralphosphaten oder Mischungen derselben ausgewählt wird.

4. Verfahren nach Anspruch 3, bei dem die Salze, die von Phosphorsäure abgeleitet sind, aus Phosphaten, Monohydrogenphosphaten oder Dihydrogenphosphaten des Kaliums, Magnesiums, Calciums, Zinks, Eisens oder Kupfers ausgewählt werden.

5. Verfahren nach Anspruch 3 oder 4, bei dem eine Mischung von Phosphorsäure und Salz/Salzen, das/die von Phosphorsäure abgeleitet ist/sind, verwendet wird, wobei das Verhältnis von Phosphorsäure zu Salz/Salzen, das/die aus Phosphorsäure abgeleitet ist/sind, 1 : 0,3 bis 1 : 20 beträgt.

6. Verfahren nach einem der Ansprüche 1 bis 5, bei dem der Gehalt der Phosphorquelle in der zu kompaktierenden Mischung 1 Gew.-% bis 20 Gew.-% beträgt.

7. Verfahren nach einem der Ansprüche 1 bis 6, bei dem das Kompaktieren in einem Spalt zwischen zwei rotierenden Walzen stattfindet, wobei die Mischung einem Druck von 50 bis 200 kN/cm ausgesetzt wird.

8. Verfahren nach einem der Ansprüche 1 bis 7, bei dem die kompaktierte Mischung in einer solchen Weise größenverringert und granuliert wird, dass mindestens 95 Gew.-% der erhaltenen Körner eine Teilchengröße zwischen 0,1 mm und 1,50 mm aufweisen.

9. Verfahren nach einem der Ansprüche 1 bis 8, bei dem die Aktivierung in einem Drehbrennofen bei einer Temperatur von 300 °C bis 800 °C, vorzugsweise 350 °C bis 600 °C, stattfindet.

10. Verfahren nach einem der Ansprüche 1 bis 9, bei dem die aktivierten Körner klassiert werden, um im 50 %-Bereich (*d*₅₀) eine durchschnittliche Teilchengröße von 0,5 mm bis 1,0 mm zu erhalten.

11. Verfahren nach einem der Ansprüche 1 bis 10, bei dem die aktivierten Körner eine spezifische BET-Oberfläche von 120 m²/g bis 380 m²/g und einen Glühverlust (1200 °C) zwischen 1 % und 15 % aufweisen.

12. Körniges phosphordotiertes aktiviertes Aluminiumoxid, das nach dem Verfahren gemäß einem der Ansprüche 1 bis 11 erhältlich ist.

13. Wachstumsregulator für den Gartenbau, der Körner aus einem gemäß Anspruch 12 erhältlichen, phosphordotierten aktivierten Aluminiumoxid umfasst.

14. Wachstumsregulator nach Anspruch 13, der imstande ist, Pflanzen mit einer kontrollierten Phosphatkonzentration in der wässrigen Phase ihrer Wachstumsmedien im Bereich von 5 bis 100 µM zu versorgen.

15. Körniges phosphordotiertes aktiviertes Aluminiumoxid, das einen Phosphorgehalt von 1 bis 20 Gew.-% PO₄³⁻, eine spezifische Oberfläche (BET) von 120 m²/g bis 380 m²/g, einen Feuchtegehalt (300 °C) von weniger als 5 %, vorzugsweise weniger als 1,5 %, und einen Glühverlust (1200 °C) von 1 % bis 15 %, vorzugsweise 4 % bis 10 % aufweist.

16. Körniges phosphordotiertes aktiviertes Aluminiumoxid nach Anspruch 15, bei dem im 50 %-Bereich (*d*₅₀) die durchschnittliche Teilchengröße 0,5 mm bis 1,0 mm beträgt.

17. Verwendung des phosphordotierten aktivierten Aluminiumoxids gemäß Anspruch 12 oder 15 als Puffer für geringen Phosphorgehalt in Wachstumsmedien von Pflanzen, vorzugsweise Topfpflanzen.

18. Verwendung des phosphordotierten aktivierten Aluminiumoxids gemäß Anspruch 12 oder 15 als pH-Puffer in Wachstumsmedien von Pflanzen, vorzugsweise Topfpflanzen.

19. Verwendung des phosphordotierten aktivierten Aluminiumoxids gemäß Anspruch 12 oder 15 als Kaliumpuffer in Wachstumsmedium von Pflanzen, vorzugsweise Topfpflanzen.

20. Verwendung des phosphordotierten aktivierten Aluminiumoxids gemäß Anspruch 12 oder 15 als Verbesserungsmittel für auf Torf basierende Wachstumsmedien für Pflanzen.

21. Verwendung des phosphordotierten aktivierten Aluminiumoxids gemäß Anspruch 12 oder 15 als Mikronährstoffpuffer in Wachstumsmedien für Pflanzen, vorzugsweise Topfpflanzen.

## Revendications

1. Procédé pour la production de granules d'une alumine activée dopée au phosphore comprenant les étapes de :
a) compactage d'un mélange d'un hydroxyde d'aluminium et d'une source de phosphore
b) réduction en taille de la matière compactée
c) activation de la matière réduite en taille à une température d'au moins 300 °C, de préférence, de 350 °C à 600 °C et, facultativement,
d) classification des granules obtenues.

2. Procédé selon la revendication 1, dans lequel un hydroxyde d'aluminium Bayer ayant un diamètre de grain dans la plage de 50 % (*d*_{*50*}) de 30 µm à 150 µm est utilisé comme hydroxyde d'aluminium.

3. Procédé selon la revendication 1 ou 2, dans lequel la source de phosphore est choisie parmi l'acide phosphorique, des sels dérivés de l'acide phosphorique, des phosphates minéraux ou des mélanges de ceux-ci.

4. Procédé selon la revendication 3, dans lequel les sels dérivés de l'acide phosphorique sont choisis parmi les phosphates, les monohydrogénophosphate et les dihydrogénophosphates de potassium, de magnésium, de calcium, de zinc, de fer ou de cuivre.

5. Procédé selon la revendication 3 ou 4, dans lequel un mélange d'acide phosphorique et de sel(s) dérivé(s) de l'acide phosphorique est utilisé, le rapport d'acide phosphorique au(x) sel(s) dérivé(s) de l'acide phosphorique étant de 1:0,3 à 1:20.

6. Procédé selon l'une quelconque des revendications 1 à 5, dans lequel la teneur en source de phosphore dans le mélange à compacter est de 1 % en poids à 20 % en poids.

7. Procédé selon l'une quelconque des revendications 1 à 6, dans lequel le compactage a lieu au point de contact entre deux rouleaux rotatifs, de sorte que le mélange est exposé à une pression de 50 à 200 kN/cm.

8. Procédé selon l'une quelconque des revendications 1 à 7, dans lequel le mélange compacté est réduit en taille et granulé d'une manière telle qu'au moins 95 % en poids des granules résultantes ont une taille des particules comprise entre 0,1 mm et 1,50 mm.

9. Procédé selon l'une quelconque des revendications 1 à 8, dans lequel l'activation a lieu dans un four rotatif à une température de 300 °C à 800 °C, de préférence, de 350 °C à 600 °C.

10. Procédé selon l'une quelconque des revendications 1 à 9, dans lequel les granules activées sont classées pour obtenir une taille moyenne des particules dans la plage de 50 % (*d*_{*50*}) de 0,5 mm à 1,0 mm.

11. Procédé selon l'une quelconque des revendications 1 à 10, dans lequel les granules activées ont une surface spécifique suivant une BET de 120 m²/g à 380 m²/g et une perte au feu (1200 °C) comprise entre 1 % et 15 %.

12. Alumine activée dopée au phosphore granulaire, pouvant être obtenue suivant le procédé de l'une quelconque des revendications 1 à 11.

13. Régulateur de croissance pour l'horticulture, comprenant des granules d'une alumine activée dopée au phosphore pouvant être obtenue selon la revendication 12.

14. Régulateur de croissance selon la revendication 13, qui est capable de fournir aux plantes une concentration de phosphate contrôlée dans la phase aqueuse de leur milieu de croissance dans la plage de 5 à 100 µ*M*.

15. Alumine activée dopée au phosphore granulaire ayant une teneur en phosphore de 1 à 20 % en poids de PO₄³⁻, une surface spécifique (BET) de 120 m²/g à 380 m²/g, une humidité (300 °C) de moins de 5 %, de préférence, de moins de 1,5 %, et une perte au feu (1200 °C) comprise entre 1 % et 15 %, de préférence, entre 4 % et 10 %.

16. Alumine activée dopée au phosphore granulaire selon la revendication 15, dans laquelle la taille moyenne des particules dans la plage de 50 % (*d*_{*50*}) est de 0,5 mm à 1,0 mm.

17. Utilisation de l'alumine activée dopée au phosphore selon la revendication 12 ou 15 comme tampon phosphate faible dans le milieu de croissance de plantes, de préférence, de plantes en pots.

18. Utilisation de l'alumine activée dopée au phosphore selon la revendication 12 ou 15 comme tampon de pH dans le milieu de croissance de plantes, de préférence, de plantes en pots.

19. Utilisation de l'alumine activée dopée au phosphore selon la revendication 12 ou 15 comme tampon de potassium dans le milieu de croissance de plantes, de préférence, de plantes en pots.

20. Utilisation de l'alumine activée dopée au phosphore selon la revendication 12 ou 15 comme agent d'amélioration pour un milieu de croissance à base de tourbe pour des plantes.

21. Utilisation de l'alumine activée dopée au phosphore selon la revendication 12 ou 15 comme tampon d'oligo-éléments dans le milieu de croissance de plantes, de préférence, de plantes en pots.
